# FASCICULE DE BREVET EUROPEEN

(11) **EP 3 663 945 B1**
(45) Date de publication et mention de la délivrance du brevet: **09.08.2023**
(21) Numéro de dépôt: 19212398.2
(22) Date de dépôt: 29.11.2019
(51) Int. Cl.: H04W 12/03, H04W 12/30, H04W 12/40, G06F 21/34, G06F 21/72, G06F 21/76, H04L 9/08, H04L 9/32, G06F 21/57

(54) **MODULE ÉLECTRONIQUE CONNECTABLE FORMÉ DE GRAPPES D'ÉLÉMENTS SÉCURISÉS**
VERBINDBARER ELEKTRONIKMODUL UMFASSEND GESICHERTE CLUSTER-ELEMENTE
CONNECTABLE ELECTRONIC MODULE COMPRISING SECURED CLUSTERS OF ELEMENTS

(30) Priorité: 04.12.2018 FR 1872297
(43) Date de publication de la demande: 10.06.2020
(73) Titulaire: IDEMIA France, 92400 Courbevoie (FR)
(72) Inventeur: DOTTAX, Emmanuelle, 92400 Courbevoie (FR); MORIN, Nicolas, 92400 Courbevoie (FR); DEPRUN, Jean-François, 92400 Courbevoie (FR); VIELLEPEAU, Joël, 92400 Courbevoie (FR)
(74) Mandataire: Idemia

(56) Documents cités:
- WO-A1-2018/005248
- US-A1- 2017 103 217
- US-A1- 2018 234 455

## Description

### Domaine technique

L'invention est dans le domaine des modules matériels de sécurité *(Hardware Security Module* ou HSM en anglais). Elle concerne, en particulier, un module électronique, de type carte électronique, connectable à un dispositif hôte.

### Technique antérieure

Un module matériel de sécurité, ci-après noté module HSM, est un appareil électronique offrant des fonctionnalités cryptographiques. En particulier, les modules HSM sont couramment utilisés pour les tâches suivantes:
- la gestion, l'importation, l'exportation et la sauvegarde de clés cryptographiques. Dans ce cas, le module HSM doit être capable d'établir des connections sécurisées avec des terminaux distants (e.g. PINPAD) utilisant ces clés cryptographiques ;
- la préparation de données, qui comprend par exemple le traitement de données (e.g. encryptage) et la génération de clés cryptographiques ;
- la personnalisation à distance qui comprend également des traitements de données (e.g. encryptage et décryptage) à la volée.

Aujourd'hui, les modules HSM prennent typiquement la forme de cartes électroniques cryptographiques embarquées, avec par exemple une interface de connexion de type PCI pour *Peripheral Component Interconnect* en anglais, PCI-express ou encore USB pour *Universal Serial Bus* en anglais, ou la forme de boîtiers externes SCSI/IP (Net HSM) par exemple.

Ces modules HSM comprennent des moyens de traitement cryptographique, typiquement des crypto-processeurs.

En pratique, le matériel est soudé sur les modules HSM, et ces derniers peuvent être scellés avec parfois des fonctionnalités d'autodestruction. Il n'est ainsi pas possible de modifier la structure d'un tel module HSM par exemple pour rajouter un crypto-processeur, sans devoir solliciter à nouveau le constructeur. En outre, comme le module HSM doit garantir des niveaux de sécurité suffisants, il est traditionnellement certifié. Aussi, lorsqu'une modification doit être réalisée, il est nécessaire faire re-certifier le module HSM une fois modifié. Or de telles modifications régulières apparaissent nécessaires puisque le volume de données à traiter augmente régulièrement ainsi que la capacité de calcul requise et l'espace de stockage nécessaire.

Par ailleurs, l'ajout de nouveaux modules matériels HSM pour suivre ces besoins toujours grandissants de puissance de calcul et de stockage présente un coût important qu'il conviendrait de réduire.

Enfin, l'ajout de tels modules matériels HSM entraine également une augmentation énergétique, et par conséquent requiert une régulation thermique adaptée. A titre illustratif, la mise à jour à distance de 3.3 millions de cartes SIM de téléphones mobiles en un jour requiert la puissance de calcul de 150 à 200 serveurs embarquant des modules matériels HSM.

Ainsi, il existe un besoin d'améliorer les modules matériels HSM existants. En particulier, il existe un besoin d'améliorer leur indépendance vis-à-vis du constructeur pour ainsi diminuer leur coût d'exploitation et d'acquisition, ainsi que leur flexibilité eu égard aux besoins de re-certification et d'évolutivité des capacités de traitement. Ces différents besoins peuvent être satisfaits tout en maintenant un bon niveau de performance et de sécurité des opérations cryptographiques qui y sont mises en oeuvre Le Document US2017/103217 est considéré comme étant un art antérieur pertinent.

### Exposé de l'invention

L'invention est définie par les revendications indépendantes 1, 11 et 14.

La présente invention a ainsi pour objet de pallier au moins un de ces inconvénients.

Dans ce contexte, l'invention propose tout d'abord un module électronique, de type carte électronique, connectable à un dispositif hôte, le module électronique comprenant :
- un contrôleur de module configuré pour communiquer avec le dispositif hôte, et
- une ou plusieurs grappes d'éléments sécurisés connectés, au sein d'une même grappe, à un bus commun qui les relie au contrôleur de module,
dans lequel le contrôleur de module est configuré pour convertir une opération (par exemple une commande ou requête reçue du dispositif hôte via une interface hôte du contrôleur) cryptographique en une pluralité de tâches cryptographiques élémentaires similaires utilisant des informations différentes et pour piloter l'exécution des tâches cryptographiques élémentaires par les éléments sécurisés.

Les tâches cryptographiques élémentaires sont similaires en ce sens qu'elles s'appuient sur par exemple une même opération ou fonction cryptographique élémentaire, en utilisant tout ou partie d'informations/données différentes. A titre d'exemple, une tâche élémentaire met en oeuvre une opération cryptographique élémentaire choisie parmi une opération de chiffrement de données, une opération de déchiffrement de données, un calcul de signature de données, une vérification de signature de données, un calcul de données d'intégrité, une vérification de données d'intégrité, une génération de clés cryptographiques par exemple RSA. Le résultat d'une tâche élémentaire peut notamment être utilisé pour la réalisation d'une tâche élémentaire suivante dans le même élément sécurisé, voire pour la tâche élémentaire d'un autre élément sécurisé.

Un module ainsi défini est évolutif sans nécessiter une re-certification à chaque modification. En effet, il est aisé d'ajouter de nouveaux éléments sécurisés déjà certifiés dans une grappe existante ou sous forme d'une nouvelle grappe pour augmenter les capacités de traitement cryptographique et stockage sécurisés. En outre, comme le contrôleur de module, qui lui n'effectue aucune opération délicate et se contente de former et dispatcher les tâches élémentaires, n'a pas à être modifié d'un point de vue sécuritaires (c'est-à-dire en lien avec une opération cryptographique), aucune re-certification n'est nécessaire.

Il est d'ailleurs préférable de configurer chaque élément sécurisé pour une tâche (ou opération) élémentaire particulière afin de tirer profit de toutes ses capacités de traitement cryptographique.

Corrélativement, l'invention concerne également un procédé de traitement dans un module électronique, de type carte électronique, connectable à un dispositif hôte et comprenant un contrôleur de module configuré pour communiquer avec le dispositif hôte et une ou plusieurs grappes d'éléments sécurisés connectés, au sein d'une même grappe, à un bus commun qui les relie au contrôleur de module, le procédé comprenant les étapes suivantes :
- convertir, par le contrôleur de module, une opération cryptographique en une pluralité de tâches cryptographiques élémentaires similaires utilisant des informations différentes, et
piloter l'exécution des tâches cryptographiques élémentaires par les éléments sécurisés.

Un serveur peut comprendre une unité de traitement et une pluralité de modules électroniques tels que définis ci-dessus reliés à l'unité de traitement.

D'autres caractéristiques du procédé et du module électronique ou du serveur selon des modes de réalisation de l'invention sont décrites par la suite.

Dans un mode de réalisation, des tâches cryptographiques élémentaires exécutées simultanément par les éléments sécurisés mettent en oeuvre la même opération cryptographique élémentaire sur des données à l'aide d'une clé cryptographique spécifique à chaque élément sécurisé. La simultanéité peut être totale ou partielle (pour tenir compte d'un décalage dans la transmission de commandes élémentaires correspondantes aux éléments sécurisés). On peut ainsi paralléliser la même opération pour différentes clés cryptographiques.

C'est par exemple le cas lorsque la tâche cryptographique élémentaire comprend la génération de données cryptées dédiées à une flotte distante d'équipements cibles, par exemple d'éléments sécurisés, et les éléments sécurisés du module électronique mettent en oeuvre chacun une clé cryptographique, par exemple une clé de session, propre à un équipement cible/élément sécurisé respectif de la flotte distante. La flotte est « distante » en ce qu'elle est distincte de l'équipement hôte recevant le module électronique. A titre d'exemple, il peut s'agir d'une flotte de terminaux mobiles sur le terrain ou une flotte de cartes à puce à configurer.

Une telle approche peut être utilisée pour gérer à distance une flotte de cartes SIM ou eUICC par exemple. Selon cette approche, chacun de tout ou partie des éléments sécurisés du module électronique peut ainsi être apparié avec un élément sécurisé de ladite flotte distante, dit élément sécurisé distant. Chacun de ces éléments sécurisés du module électronique peut alors par exemple générer (par diversification notamment) une clé cryptographique à partir d'une information secrète partagée avec l'élément sécurisé apparié, telle qu'une clé maître, et d'un numéro de série, aux fins de traiter (par exemple chiffrer ou déchiffrer) des données spécifiques à l'élément sécurisé apparié.

Selon une caractéristique particulière, les éléments sécurisés du module électronique sont du même type que celui des éléments sécurisés de la flotte distante. Dans cette configuration, le module électronique ne requiert avantageusement aucune certification supplémentaire du matériel à celle déjà réalisée pour les SEs de la flotte.

Dans une application particulière de l'approche définie ci-dessus, les données simultanément traitées par les éléments sécurisés du module électronique sont identiques et comprennent des données de mise à jour d'un système d'exploitation (OS) des éléments sécurisés de la flotte distante. En variante, il peut s'agir de données de mise à jour de toute application installée ou à installer dans les éléments sécurisés distants.

Ainsi, les mêmes données d'OS sont chiffrées, par les éléments sécurisés du module électronique, à l'aide de clés cryptographiques différentes correspondant respectivement aux éléments sécurisés distants. Les inventeurs ont constaté qu'un tel module électronique selon l'invention offre des performances intéressantes pour notamment le chiffrement d'un OS (ou d'une application) mis à jour à diffuser auprès d'un grand nombre de cartes SIM ou eUICC. Des moyens classiques, type OTA (pour « over-the-air ») via SMS avec protocole chiffré, ou bien, par exemple, via le protocole HTTPs (pour « Hypertext Transfert Protocol Secure » en anglais) basé sur de l'HTTP (pour « Hypertext Transfert Protocol ») sécurisé par PSK TLS (pour « Pre-Shared Key Transport Layer Security ») peuvent être utilisés pour envoyer les blocs chiffrés de l'OS mis à jour à ces cartes distantes.

Dans une autre application envisagée, les données simultanément traitées par les éléments sécurisés du module électronique comprennent des données de profils de téléphonie mobile spécifiques aux éléments sécurisés respectifs de la flotte distante. Un profil de téléphonie mobile contient par exemple l'ensemble des données ou caractéristiques nécessaires à un opérateur de téléphonie mobile (dénoté MNO pour « mobile network operator ») pour identifier l'élément sécurisé (généralement une carte SIM, UICC ou eUlCC) sur son réseau mobile et ainsi lui offrir des capacités de communication et connectivité. Le module électronique de l'invention permet ici à un opérateur mobile MNO de gérer efficacement les profils à charger chez ses abonnés.

Dans un autre mode de réalisation, des tâches cryptographiques élémentaires exécutées simultanément (encore une fois au moins partiellement) par les éléments sécurisés d'une grappe mettent en oeuvre la même opération élémentaire cryptographique sur des données différentes à l'aide d'une même clé cryptographique partagées par les éléments sécurisés. Cette approche permet de traiter, par exemple chiffrer ou déchiffrer, efficacement et à moindre coût, un flux de données en opérant un traitement au moins partiellement parallèle sur des blocs constitutifs (typiquement consécutifs) du flux. Dans ce cas, les données différentes correspondent à des portions différentes (e.g. blocs) d'un même flux de données. On voit ainsi qu'en faisant varier le nombre d'éléments sécurisés, sans nouvelle certification, il est possible d'adapter le module électronique au débit du flux à traiter, notamment pour garantir un traitement temps réel (par exemple on peut augmenter le nombre d'éléments sécurisés si les flux à traiter sont de taille plus grande).

Pour réaliser un lien sécurisé entre deux ordinateurs, on peut prévoir avantageusement d'utiliser un module électronique selon l'invention à chacune des deux extrémités. Il est ainsi possible d'ajuster rapidement les capacités de chacune des extrémités aux besoins, par exemple au volume de traitements en temps réel permis par le réseau, aux capacités de l'autre extrémité, etc. Dans ce cas, l'invention propose un système comprenant deux dispositifs communiquant entre eux, chaque dispositif comprenant un module électronique tel que précédemment défini, les éléments sécurisés d'un des deux dispositifs mettant en oeuvre des tâches cryptographiques élémentaires qui sont complémentaires (c'est-à-dire réciproques, telles chiffrement/déchiffrement, signature/vérification de signature, etc.) de celles mises en oeuvre par les éléments sécurisés de l'autre dispositif. Dans ce cas, les données traitées par l'un des modules électroniques sont transmises à l'autre module électronique pour traitement inverse ou réciproque.

Dans un mode de réalisation de l'invention, tous les éléments sécurisés d'une grappe sont configurés pour mettre en oeuvre une même opération cryptographique élémentaire utilisant des informations différentes et au moins deux grappes sont configurées pour mettre en oeuvre deux opérations cryptographiques élémentaires différentes. On peut ainsi dédier différentes portions matérielles du module électronique à des tâches différentes, éventuellement complémentaires. Notamment, cette disposition permet l'établissement à long terme du lien sécurisé évoqué ci-dessus, chaque ordinateur pouvant mettre en oeuvre les différentes opérations cryptographiques pour une communication bidirectionnelle sécurisée (par exemple une grappe pour le chiffrement avant transmission et l'autre grappe pour déchiffrement des données reçues).

Dans un autre mode de réalisation de l'invention, le contrôleur de module communique avec les éléments sécurisés selon un mode maître/esclave pour l'exécution des tâches cryptographiques élémentaires. Cela permet un contrôle précis de la pluralité d'éléments sécurisés.

Dans encore un autre mode de réalisation, les éléments sécurisés sont certifiés, notamment les éléments sécurisés sont conformes à au moins une des normes de sécurité suivantes : FIPS 140-3/4, Critères Communs EAL4+ ou version 3.1 release 4, MEPS, MEPS2, ISO/IEC19790:2012. Une sécurité du module électronique est garantie par la certification de chaque élément sécurisé qu'il comporte.

Dans encore un autre mode de réalisation, un bus reliant les éléments sécurisés d'une grappe audit contrôleur de module est un bus SPI ou I2C ou I3C ou ISO ou UART (pour « Universal Asynchronous Receiver Transmitter » ou émetteur-récepteur asynchrone universel). Dans ce cas, le contrôleur comporte une interface (avec un microcontrôleur correspondant) SPI, ISO, UART, I2C (version 6.0 du 4 avril 2014) ou I3C (MIPI I3C v1.0).

Dans encore un autre mode de réalisation, les éléments sécurisés de la ou des grappes sont agencés sur deux faces opposées de la carte électronique. Cette disposition permet d'augmenter la capacité de traitement du module électronique, à coût réduit.

Dans encore un autre mode de réalisation, les éléments sécurisés d'une grappe sont agencés de sorte à exécuter en parallèle des tâches cryptographiques élémentaires similaires utilisant des informations différentes. Le contrôle de l'exécution (au moins partiellement) parallèle est notamment réalisé par le contrôleur de module qui peut, par exemple, agir comme un maître envers les éléments sécurisés agissant comme esclaves. Selon les capacités des bus de communication entre contrôleur de module et éléments sécurisés, cette disposition permet d'optimiser l'utilisation des ressources cryptographiques formées par les éléments sécurisés. L'exécution parallèle par les éléments sécurisés est répétée dans le temps (généralement sur des blocs de données suivants à traiter) permettant d'obtenir des performances de traitement au moins équivalentes à celles des modules HSM de l'art antérieur.

Selon une caractéristique particulière, le contrôleur de module est configuré pour multiplexer temporellement sur le bus de la grappe, pendant un intervalle temporel correspondant à une période estimée d'exécution d'une tâche cryptographique élémentaire par un élément sécurisé, des commandes élémentaires à destination des éléments sécurisés de la grappe pour l'exécution (au moins partiellement) simultanée de tâches cryptographiques élémentaires par ces éléments sécurisés lors d'une période d'exécution suivante. Ainsi, pendant que les éléments sécurisés exécutent leur tâche courante (durant la période estimée), le contrôleur de module leurs transmet la commande suivante à exécuter lors de la période suivante. Cette commande peut notamment comprendre le bloc de données à traiter lors de cette période suivante. Par le multiplexage temporel ainsi réalisé, on optimise l'utilisation du bus pour accroître la capacité de traitement cryptographique de la grappe.

Il est à noter qu'un bus full duplex permet en même temps au contrôleur de module de recevoir les blocs traités par les éléments sécurisés lors d'une période précédente.

Selon une autre caractéristique particulière, le nombre d'éléments sécurisés sur la grappe est limité (c'est-à-dire inférieur ou égal) au rapport entre la durée de la période estimée d'exécution d'une tâche cryptographique et le temps de transmission d'une commande élémentaire (à un SE). Cette disposition garantit que le contrôleur de module peut s'adresser à chaque élément sécurisé de la grappe pendant chaque période estimée. Tous les éléments sécurisés peuvent ainsi exécuter une tâche élémentaire à chaque période successive, optimisant de la sorte l'utilisation des ressources cryptographiques du module électronique.

Dans encore un autre mode de réalisation, le module électronique est sous forme de carte électronique enfichable dans un ordinateur.

Dans un mode particulier de réalisation, les différentes étapes du procédé précité sont déterminées par des instructions de programmes d'ordinateurs.

En conséquence, l'invention vise aussi un programme d'ordinateur sur un support d'informations, ce programme étant susceptible d'être mis en oeuvre par une unité de traitement, ce programme comprenant des instructions adaptées à la mise en oeuvre des étapes du procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par une unité de traitement, et comprenant des instructions d'un programme d'ordinateur tel que mentionné ci-dessus.

Le support d'informations peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur une plateforme de stockage d'un réseau de type Internet.

Alternativement, le support d'informations peut être un circuit intégré dans lequel le programme est incorporé, le circuit étant adapté pour exécuter ou pour être utilisé dans l'exécution du procédé en question.

Le support d'informations et le programme d'ordinateur précités présentent des caractéristiques et avantages analogues au procédé qu'ils mettent en oeuvre.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
[Fig. 1] La **Figure** 1 représente schématiquement un contexte dans lequel un ensemble de serveurs HSM selon l'art antérieur est nécessaire pour mettre à jour une flotte d'éléments sécurisés dans des terminaux.
[Fig. 2] La **Figure** 2 représente schématiquement un système dans lequel un module électronique selon un mode particulier de réalisation est utilisé.
[Fig. 3] La **Figure** 3 représente schématiquement un module électronique selon un mode particulier de réalisation.
[Fig. 4] La **Figure** 4 représente schématiquement l'architecture logique d'un contrôleur de module électronique selon un mode particulier de réalisation.
[Fig. 5] La **Figure** 5 représente sous forme d'organigramme, les principales étapes d'un procédé mis en oeuvre par un module électronique du contrôleur selon un mode particulier de réalisation.
[Fig. 6] La **Figure** 6 illustre l'enchainement temporel des commandes échangées entre les interfaces du contrôleur du module électronique et les éléments sécurisés connectés, dans un mode particulier de réalisation.

### Description détaillée

De façon générale, l'invention concerne un module électronique connectable à un dispositif hôte, respectant les standards de sécurité d'un module de matériel de sécurité HSM. En particulier, ce module électronique est conçu pour par exemple se connecter dans une baie formant serveur, assurant ainsi modularité et évolutivité de celui-ci. Le serveur peut ainsi comprendre une unité de traitement et une pluralité de tels modules électroniques, enfichés dans la baie, reliés à l'unité de traitement.

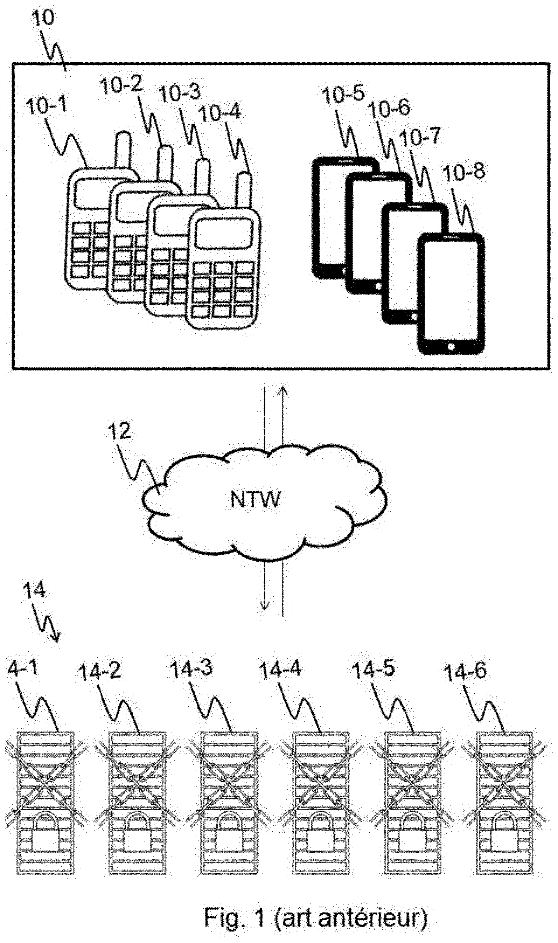

La **Figure 1** représente schématiquement un contexte de l'art antérieur, dans lequel un ensemble de serveurs classiques 14-X dotés de modules HSM est nécessaire pour réaliser des traitements cryptographiques à destination d'un ou plusieurs équipements cibles 10-X d'un ensemble 10 d'équipements.

Comme illustré, les équipements cibles peuvent être des terminaux mobiles 10-1, 10-2, 10-3, 10-4 et 10-5, 10-6, 10-7, 10-8 formant une flotte sur le terrain d'éléments sécurisés (non représentés) incorporés, voire soudés, dans les terminaux.

En variante, les équipements cibles 10-X peuvent être en usine, prêts à être personnalisés suite aux traitements cryptographiques ici évoqués.

Par exemple, les terminaux 10-1, 10-2, 10-3, 10-4 sont des téléphones mobiles basiques incorporant un élément sécurisé amovible (premier type d'élément sécurisé), par exemple une UICC (*Universal Integrated Circuit Card* en anglais) conforme à la norme ETSI TS 102 221 v.11.0.0, et les terminaux 10-5, 10-6, 10-7, 10-8 sont des téléphones intelligents (*smartphones* en anglais) dans lesquels des éléments sécurisés embarqués sont soudés (deuxième type d'éléments sécurisés), par exemple une eUICC (*embedded Universal Integrated Circuit Card* en anglais), telle que visée dans la norme ETSI TS 103 383 v.13.2.0.

Par la suite, les équipements cibles sont désignés par la référence générique 10, sauf mention contraire. Dans certains modes de réalisation, tout ou partie des équipements cibles n'incorpore pas nécessairement des éléments sécurisés. Par exemple, les traitements cryptographiques peuvent mettre en oeuvre un protocole sécurisé de transport de données, par exemple le protocole TLS (pour Sécurité de la couche transport ou « Transport Layer Security »), à destination d'équipements conventionnels (dépourvus d'éléments sécurisés).

Tous ces équipements cibles sont capables de communiquer via un ou plusieurs réseaux de communication NTW 12. Le réseau 12 est par exemple un réseau de téléphonie mobile comprenant de façon classique des stations de base (non représentées) pour connecter les terminaux mobiles, ainsi qu'une pluralité d'entités (type passerelle GMSC, serveurs HLR, MSC, VLR, etc. non représentées). Le réseau 12 comprend par exemple un serveur de gestion d'abonnements (non représenté, *Subscription Manager* en anglais) dont le rôle classique est de gérer les flottes d'éléments sécurisés, et plus précisément de gérer (charger sur, mettre à jour dans, supprimer depuis des terminaux mobiles) les profils d'abonnés auprès des opérateurs mobiles MNO.

Dans la variante où les équipements cibles sont en usine, le réseau 12 peut être un simple bus de communication.

De façon connue également, les éléments sécurisés incorporés dans les équipements cibles 10 sont équipés d'un système d'exploitation dans lequel sont exécutées des fonctions sécurisées offertes aux applications des terminaux, par exemple des fonctions de chiffrement pour des transactions de paiement via une application de paiement mobile prévue dans les terminaux.

Ce système d'exploitation des éléments sécurisés peut être mis à jour, généralement sous la responsabilité de l'opérateur MNO. De même, les profils d'abonné peuvent être mis à jour dans les éléments sécurisés, sous l'action du serveur de gestion d'abonnements. Pour ce faire, la mise à jour, c'est-à-dire les données de mise à jour, doit être chargée sur tous les terminaux de la flotte, c'est-à-dire sur un grand nombre d'éléments sécurisés.

Classiquement, cette mise à jour est effectuée à distance, par voie OTA, au moyen de nombreux serveurs 14-1, 14-2, 14-3, 14-4, 14-5, 14-6 offrant des fonctionnalités cryptographiques par des modules HSM, par exemple supportant les algorithmes cryptographiques suivants : DES (Data Encryption Standard), 3DES (Triple DES), AES (Advanced Encryption Standard), RSA (Rivest, Shamir et Adelman), ECC (Cryptographie sur les courbes elliptiques), MD5 (Message Digest 5), SHA-1 (Secure Hash Algorithm 1) ou SHA-2. Par la suite, ces serveurs équipés de modules HSM de l'art antérieur sont désignés par la référence générique 14.

Comme déjà mentionné, ces serveurs sont scellés et offrent peu de modularité de sorte qu'il est nécessaire de repasser par leur constructeur pour les modifier ou les faire certifier.

D'une façon plus générale, cet inconvénient se présente dès lors qu'il est nécessaire de réaliser un grand nombre d'opérations cryptographiques sécurisées (où l'accès à des clés cryptographiques doit être hautement protégé). En effet, à ce jour, seuls des serveurs équipés de modules HSM semblent conçus pour une telle utilisation.

Un module électronique, de type carte électronique, connectable à un dispositif hôte est ainsi conçu comme une alternative aux modules HSM onéreux et peu modulaires ou peu évolutifs de l'art antérieur. Il comprend, outre un contrôleur de module configuré pour communiquer avec le dispositif hôte, une ou plusieurs grappes d'éléments sécurisés connectés, au sein d'une même grappe, à un même bus, c'est-à-dire un bus commun, qui les relie au contrôleur. L'évolutivité et la modularité résident en partie dans l'organisation des éléments sécurisés en grappes qui permet d'ajouter ou supprimer une ou plusieurs grappes, mais également dans l'utilisation d'entités élémentaires de traitement, ici les éléments sécurisés, qu'il est aisé d'ajouter ou de supprimer à la demande.

Le contrôleur de module est alors configuré pour convertir une opération (par exemple une commande ou une requête reçue du dispositif hôte via une interface hôte du contrôleur) cryptographique en une pluralité de tâches cryptographiques élémentaires similaires utilisant des informations différentes et puis pour piloter l'exécution des tâches cryptographiques élémentaires par les éléments sécurisés, c'est-à-dire envoyer des commandes correspondantes aux différents éléments sécurisés.

De manière générale, les éléments sécurisés du module électronique assurent sa sécurité, sans qu'il n'y ait besoin de composant de sécurisation supplémentaire sur la carte. Ainsi ces éléments sécurisés peuvent être gérés par un contrôleur de module non sécurisé, par exemple un circuit FPGA (« Field-Programmable Gate Array » pour réseau de portes programmable), sans que cela n'affecte la sécurité du module, tant au niveau de la protection des données (notamment des secrets tels que des clés cryptographiques) que vis-à-vis d'attaques physiques contre le module.

Avantageusement, la sécurité inhérente aux éléments sécurisés, lorsque certifiés, permet d'effectuer des opérations cryptographiques dans un environnement totalement sécurisé, et ceci à bas coût. La pluralité des éléments sécurisés permet en outre d'effectuer ces opérations en parallèle (au moins partiellement), de sorte que la puissance de calcul globale du module électronique à un instant donné permet d'assurer les fonctions cryptographiques des modules HSM de l'art antérieur, pour un coût bien inférieur.

En outre, cette sécurité inhérente des éléments sécurisés permet une certaine modularité du module électronique puisque l'ajout d'éléments sécurisés sur le module (sur une grappe existante ou en tant que nouvelle grappe) ne nécessite pas de certification supplémentaire.

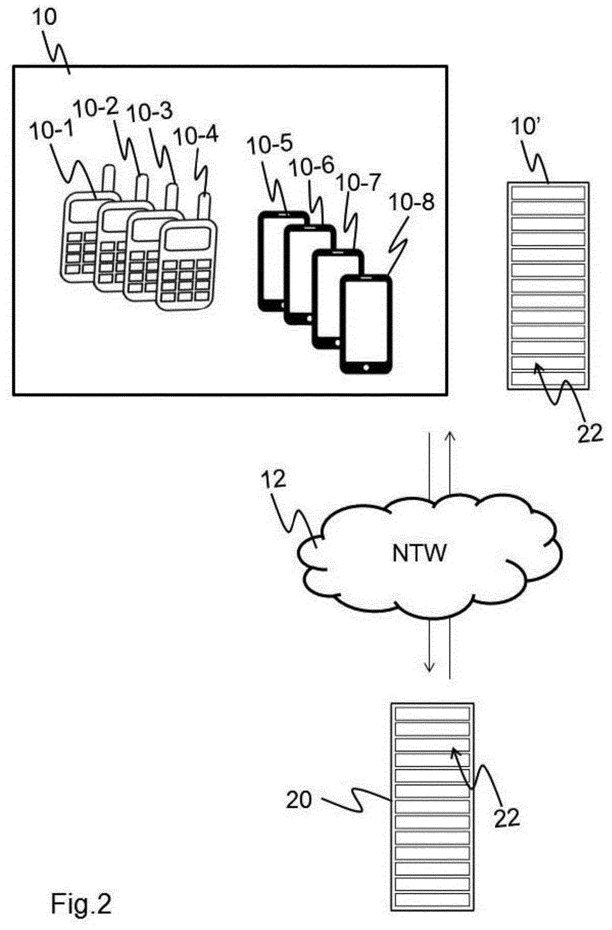

La **Figure 2** représente schématiquement un système dans lequel un module électronique 22 selon l'invention est utilisé. Cette figure illustre deux applications typiques d'utilisation de ce module, selon par exemple que le ou les équipements cibles soient une flotte de terminaux mobiles 10 équipés d'éléments sécurisés ou soit un équipement 10' lui-même doté d'un ou plusieurs modules électroniques selon l'invention. Bien entendu, en variante, les terminaux cibles peuvent être de simples ordinateurs ou serveurs dotés ou non d'éléments sécurisés, voire simplement être des éléments sécurisés (par exemple des cartes à puce à configurer en usine).

Dans ces diverses applications, le serveur 20 communique avec les équipements cibles 10, 10', cette communication impliquant la réalisation d'une opération cryptographique, telle que par exemple le chiffrement de données à transmettre aux équipements cibles, le déchiffrement de données chiffrées reçues des équipements cibles, la signature de données à transmettre, la vérification d'une signature reçue, le calcul de données d'intégrité sur des données à transmettre, la vérification de données d'intégrité, la génération de clés cryptographiques pour personnaliser les équipements cibles (typiquement des cartes à puce), etc.

Pour ce faire, les inventeurs prévoient, à la place des serveurs 14 scellés de l'art antérieur, un ou plusieurs nouveaux modules électroniques 22 connectables à un équipement hôte 20, tel un serveur, typiquement dans une baie. Chaque module électronique 22 respecte individuellement les standards de sécurité d'un module HSM classique, grâce notamment à la certification individuelle de chacun des éléments sécurisés le constituant, par exemple conforme à l'une des normes *Federal Information Processing Standard* FIPS 140-3/4 (projet 140-3 du 7 mars 2013 ou projet 140-4 du 1^{er} juillet 2014) ; Critères Communs CC EAL4+ ou version 3.1 ; *Minimum Energy Performance Standard* MEPS ou MEPS2, ISO/IEC19790:2012.

Une telle baie comprenant une pluralité de modules électroniques connectables peut ainsi constituer avantageusement un serveur modulaire offrant des fonctionnalités cryptographiques permettant d'assurer un niveau de sécurité comparable aux modules HSM classiques tout en étant beaucoup moins coûteux, plus commode à certifier, et moins volumineux.

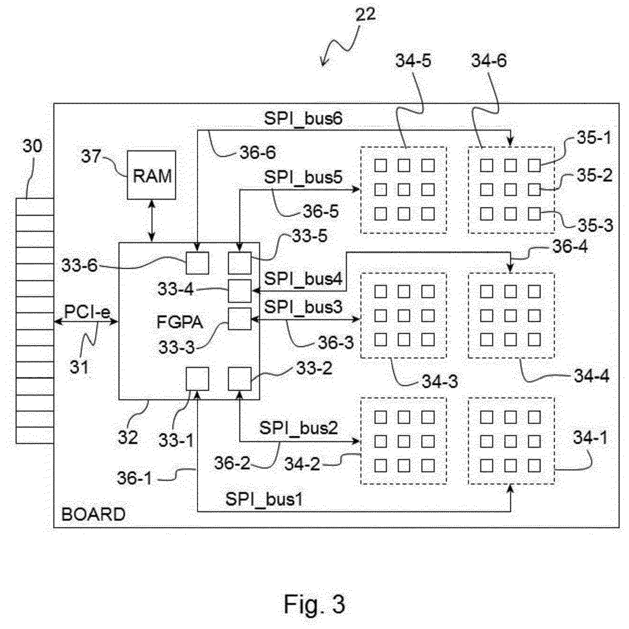

Un module électronique 22, dont un exemple est ici décrit en référence à la **Figure 3****,** comprend une carte électronique, un moyen de connexion 30 à la baie (par exemple une interface PCI, préférentiellement PCI-Express, avec un dispositif hôte, ici le serveur 20), un contrôleur de module 32, une ou plusieurs grappes 34-1, 34-2, 34-3, 34-4, 34-5, 34-6 (référencées plus généralement 34) d'éléments sécurisés 35-1, 35-2, 35-3 (référencés plus généralement 35) connectés, au sein d'une même grappe 34, à un même bus 36-1, 36-2, 36-3, 36-4, 36-5, 36-6 (référencé plus généralement 36) qui les relie au contrôleur, ainsi qu'une mémoire volatile de travail 37, type RAM (pour « random access memory »).

Le bus reliant les éléments sécurisés d'une grappe 34 audit contrôleur de module 32 est typiquement un bus préférentiellement SPI ou en variante I2C ou I3C ou encore ISO ou UART, et le contrôleur 32 comporte alors des interfaces de communication 33-1, 33-2, 33-3, 33-4, 33-5, 33-6 (référencés plus généralement 33) correspondantes, une par grappe 34. Différents types de bus internes 36 peuvent être utilisés, même si de préférence le même type de bus est mis en oeuvre.

Le moyen de connexion 30 est relié par un bus de communication 31 au contrôleur 32. Le bus 31 est par exemple de type PCI ou PCI-e (pour *Peripheral Component Interconnect Express* en anglais), de type I2C (pour *Inter-Integrated Circuit* en anglais) ou de type I3C. PCI-e, I2C et I3C sont des marques.

Le contrôleur de module 32 peut être reconfigurable, par exemple être un réseau de portes programmable FPGA. Le contrôleur de module 32 communique typiquement avec les éléments sécurisés selon un mode maître/esclave pour l'exécution de tâches cryptographiques élémentaires par les éléments sécurisés. Ainsi, chaque grappe 34 est constituée d'une pluralité d'éléments sécurisés 35 (même si ponctuellement un grappe peut contenir un unique élément sécurisé pour des raisons de dimensionnement si les autres grappes sont pleines), chacun jouant le rôle d'esclave dans la communication avec le contrôleur 32.

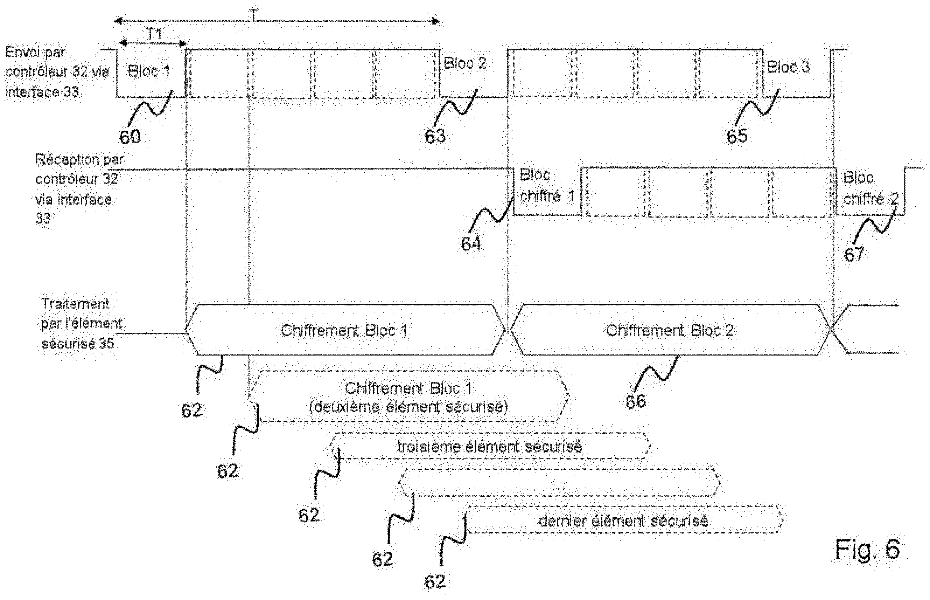

En pratique, la taille des grappes dépend des capacités des interfaces de communication 33. Par exemple, le nombre d'éléments sécurisés dans une grappe peut correspondre (en tout état de cause être limité, c'est-à-dire inférieur ou égal) au rapport entre la durée (T sur la **Figure 6** décrite ci-dessous) du traitement, par exemple du chiffrement, d'un bloc de taille donnée par un élément sécurisé donné (et plus généralement, une durée estimée d'exécution d'une tâche cryptographique par un élément sécurisé) et la durée de transport (T1 sur la **Figure 6** décrite ci-dessous) de ce bloc sur le bus de communication (en d'autres termes le temps de transmission de la commande élémentaire correspondante, laquelle inclut le bloc à traiter). Ainsi, il est possible d'optimiser la bande passante entre l'interface de communication 33 et la grappe 34 d'éléments sécurisés 35 afin de minimiser le nombre d'interfaces 33 nécessaires.

Dans un mode de réalisation, les éléments sécurisés de la ou des grappes sont agencés sur deux faces opposées de la carte électronique, ceci afin d'accroître les performances de traitement du module électronique, tant que le contrôleur 32 dispose d'assez d'interfaces 33.

Dans certains cas, les grappes 34 peuvent être de tailles différentes, c'est-à-dire comprendre un nombre différent d'éléments sécurisés 35. Toutefois, l'usage de grappes de même taille permet de simplifier leur gestion par le contrôleur 32.

De manière générale, un module 22 conforme à des modes de réalisation supporte des API (pour *Application Programming Interface* en anglais) classiques pour communiquer avec l'équipement hôte 20, par exemple de type PKCS # 11, Open SSL, MS CAPI, Java JCE / JCA. Windows (marque) et Linux (marque) sont aussi pris en charge.

Les modes de réalisation prévus ne sont pas limités au nombre d'interfaces 33, de grappes 34, d'éléments sécurisés 35 représentés.

Comme introduit plus haut, pour réaliser une opération cryptographique sollicitée par exemple par une commande ou requête du serveur 20, le contrôleur 32 décompose, c'est-à-dire convertit, cette opération cryptographique en une pluralité de tâches cryptographiques élémentaires similaires qu'il doit affecter aux différents éléments sécurisés 35 qu'il a à sa disposition.

Le dimensionnement des grappes 34 d'éléments sécurisés 35 (en termes du nombre de grappes et du nombre d'éléments sécurisés) peut être réalisé au préalable à partir d'un volume de traitements cryptographiques prédéfinis, par exemple la mise à jour de l'OS de 3,3 millions d'équipements cibles par jour (comme repris dans un exemple ci-dessous). Le contrôleur de module 32 a ainsi connaissance de quelles interfaces 33 sont connectées à des grappes 34, et du nombre d'éléments sécurisés 35 sur chaque grappe. En outre, des moyens classiques d'adressage sur les bus 36 peuvent être utilisés pour permettre une communication entre le contrôleur 32 et chacun des éléments sécurisés 35.

A des fins d'optimisation, le contrôleur de module 32 pilote les éléments sécurisés 35 d'une grappe 34 de sorte à exécuter (au moins partiellement) en parallèle des tâches cryptographiques élémentaires similaires utilisant des informations différentes. Le contrôleur peut par exemple tirer parti d'un multiplexage de commandes visant à envoyer ces tâches élémentaires sur les bus reliant chacune des grappes. En détail, le contrôleur de module 32 peut multiplexer temporellement sur le bus d'une grappe, pendant un intervalle temporel T correspondant à une période estimée d'exécution d'une tâche cryptographique élémentaire par un élément sécurisé, des commandes élémentaires à destination des éléments sécurisés de la grappe pour l'exécution simultanée de tâches cryptographiques élémentaires par ces éléments sécurisés lors d'une période d'exécution suivante.

Ce multiplexage est illustré en **Figure 6** (décrite par la suite) du point de vue du contrôleur 32 (qui envoie les commandes élémentaires puis reçoit les réponses) pour des commandes élémentaires de chiffrement à destination d'un élément sécurisé d'une grappe.

Les traits en pointillés de la première ligne illustrent l'envoi de commandes multiplexées (avec blocs à chiffrer par exemple - de façon générale toute donnée pour le traitement) à quatre autres éléments sécurisés pendant la période impartie T (frise du haut), puis la réception des quatre réponses correspondantes (blocs chiffrés) avec un décalage d'une période T (frise du milieu). Les cinq éléments sécurisés de cet exemple traitent (chiffrent) les données de façon simultanée au moins partiellement (pendant la période T allouée, comme montré par le chevauchement des traitements représentés en bas de la figure).

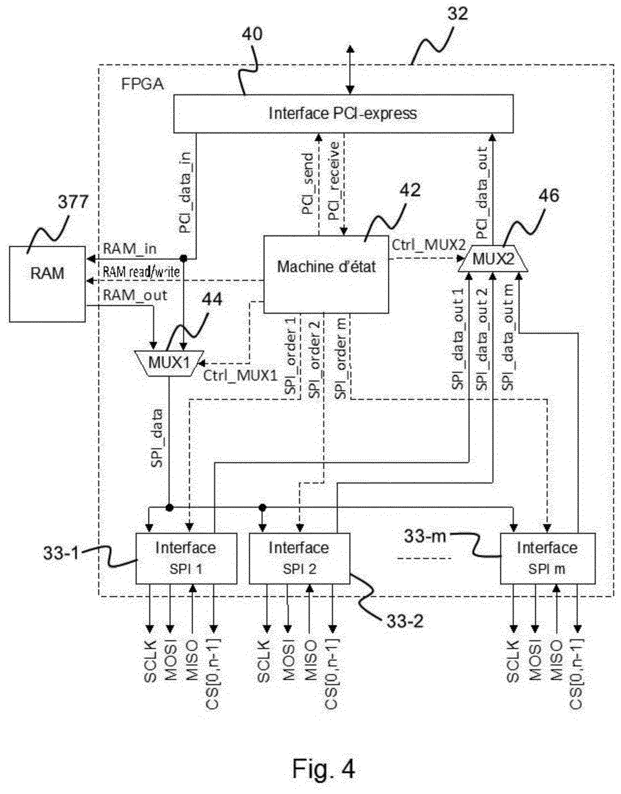

La **Figure 4** représente schématiquement une architecture logique possible pour un contrôleur selon un mode particulier de réalisation, par exemple le contrôleur 32 de la figure précédente.

Dans cet exemple, le contrôleur 32 est un FPGA. Il comprend une interface PCI-Express 40. Cette interface 40 est configurée pour communiquer avec le moyen de connexion 30 représenté sur la **Figure 3****,** via un bus 31 également représenté sur la **Figure 3****.**

Le contrôleur 32 comprend une machine d'état 42 (*Data Dispatcher* en anglais) configurée pour gérer le transport des données dans l'architecture logique. Elle est également configurée pour communiquer avec la mémoire RAM 37 de la **Figure 3****.**

Cette machine d'état 42 est en outre reliée à des multiplexeurs 44 et 46 faisant également partie du contrôleur 32. Ces multiplexeurs sont chargés de gérer la répartition des données entre les m interfaces de communication 33-1, 33-2, ...33-m (sur la **Figure 3****,** m=6). En pratique, chaque interface 33-i dispose d'une mémoire tampon RAM interne (non représentée) pour stocker les données à traiter par les éléments sécurisés 35 de la grappe correspondante 34-i, par exemple des données de diversification pour la génération de clés cryptographiques, des blocs de données (e.g. bloc de mise à jour d'un OS ou bloc d'un profil d'abonné) à chiffrer ou à déchiffrer ou desquels une signature ou information d'intégrité doit être calculée, des signatures à vérifier, des informations d'intégrité à vérifier, etc.

Dans cet exemple, les interfaces de communication sont de type SPI. En pratique, l'interface communique un signal d'horloge noté SCLK, un signal MOSI (pour *Master Out Slave In* en anglais) transmettant des données en provenance du contrôleur (maître) à un des éléments sécurisés (esclaves) de la grappe, un signal MISO (pour *Master In Slave Out* en anglais) transmettant des données en provenance d'un élément sécurisé (esclave) à destination du contrôleur (maître), un signal de sélection (noté CS[0,n-1]) d'un élément sécurisé donné sur le bus. Ces différents signaux permettent la communication sur le bus entre le contrôleur 32 et chacun des éléments sécurisés 35 de la grappe 34-i connectée.

Dans un autre exemple, les interfaces de communication sont de type I2C. En pratique, l'interface communique un signal d'horloge SCL (pour *Serial Clock Line*) et un signal de SDA (pour *Serial Data Line*) transmettant des données en provenance du contrôleur et des éléments sécurisés de la grappe. La sélection d'un élément sécurisé sur la grappe s'effectue par la transmission depuis le contrôleur de son adresse unique sur le bus avant chaque transaction.

Les liens logiques (représentés par des flèches pleines) entre les éléments constitutifs du contrôleur et les éléments liés à celui-ci sont les suivants :
- **PCI_data_in** : ce bus PCI transporte des données en provenance de l'interface PCI-Express 40 ;
- **RAM_in** : ce bus transporte ces données jusqu'à la mémoire RAM 37 ;
- **RAM_out** : ce bus transporte les données de la RAM 37 au multiplexeur 44 ;
- **SPI_data** : ce bus transporte les blocs de données ou des données de diversification jusqu'aux interfaces 33 ;
- **SPI_data_out 1...m** : ce bus transporte les blocs chiffrés (par les éléments sécurisés) reçus des interfaces 33 ;
- **PCI_data_out** : ce bus transporte les données (chiffrées) à envoyer à l'interface PCI-Express 40.

Les commandes échangées (échanges représentés par des flèches en pointillés) avec la machine d'état 42 et les autres éléments sont les suivantes :
- **PCI_send** : commande d'envoi de données (chiffrées) à la baie (au PC) par l'interface PCI-express ;
- **PCI_receive** : commande de réception de données (à chiffrer) en provenance de la baie (au PC) par l'interface PCI-express ;
- **RAM read/write** : commande de lecture/l'écriture dans la RAM 37 ;
- **Ctrl_MUX1** / **Ctrl_MUX2** : commandes des multiplexeurs 44 et 46 ;
- **SPI_order 1...m** : commandes des interfaces SPI.

La **Figure 6** illustre le séquençage temporel des échanges entre les interfaces 33 du contrôleur 32 et les éléments sécurisés 35 connectés, dans un mode particulier de réalisation. Ce séquençage est opéré au niveau d'une interface 33 par exemple sur un bus SPI permettant au contrôleur de transmettre et recevoir simultanément. Le séquençage s'appuie sur un multiplexage temporel, par période T, des commandes élémentaires à destination des éléments sécurisés 35, et par conséquent à un multiplexage temporel en retour des réponses des éléments sécurisés 35.

Au cours d'une étape 60, des premières commandes élémentaires sont envoyées de l'interface 33 aux éléments sécurisés 35 de la grappe 34 considérée selon un multiplexage temporel. Le trait continu correspond à l'envoi (de durée T1) à un premier élément sécurisé donné. Les traits discontinus de la première ligne montrent les envois (de durée T1) aux autres éléments sécurisés de la grappe durant la période T prédéfinie, ici quatre autres.

La première commande élémentaire peut simplement contenir des données de diversification (parfois spécifiques aux éléments sécurisés) pour permettre aux éléments sécurisés de générer leur propre clé cryptographique et/ou un premier bloc de données à traiter (par exemple premier bloc d'OS mis à jour ou de profil d'abonné).

Non représenté, un message de statut est renvoyé par chaque élément sécurisé à réception de sa commande élémentaire.

A réception de ces premières commandes élémentaires, chaque élément sécurisé 35 lance la génération (par diversification) de sa clé cryptographique et/ou le traitement cryptographique, par exemple de chiffrement d'un bloc de données, utilisant cette clé (ou toute autre clé déjà mémorisée). C'est l'étape 62 où les différents éléments sécurisés 35 de la grappe opèrent en parallèle (voir les cinq blocs de traitement 62 qui se chevauchent en bas de la figure).

Au cours d'une étape 63 qui commence à la fin de la première période T, les commandes élémentaires suivantes (comportant un bloc suivant de données) sont successivement envoyées par l'interface 33 aux éléments sécurisés 35 selon toujours le même multiplexage temporel.

Lorsqu'il reçoit cette nouvelle commande élémentaire, chaque élément sécurisé 35 a fini le traitement du bloc précédent. Il commence alors le traitement cryptographique du bloc suivant ainsi reçu (étape 66).

Simultanément, il renvoie le résultat du traitement précédent (par exemple un bloc chiffré) lors de l'étape 64. L'interface 33 du contrôleur 32 reçoit ainsi tous les résultats des différents éléments sécurisés toujours selon le même multiplexage temporel (en trait continu sur la deuxième ligne, le retour du premier élément sécurisé, et en traits discontinus les retours des autres éléments sécurisés dans le même ordre que l'envoi des commandes élémentaires).

Ce processus est répété tant qu'il y a des blocs de données à traiter (envoi de la commande élémentaire suivant à l'étape 65, réception du deuxième bloc traité à l'étape 67).

Lorsque tous les blocs de données à traiter ont été envoyés, le contrôleur 32 peut envoyer une commande élémentaire simplifiée (sans bloc de données) pour demander le résultat du dernier bloc traité.

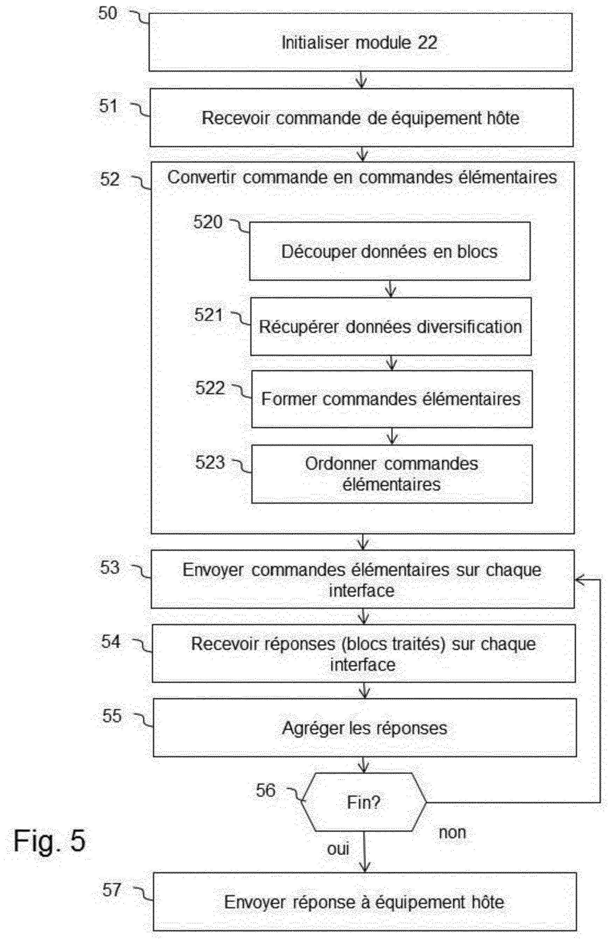

La **Figure 5** représente les principales étapes d'un procédé mis en oeuvre par le module électronique 22 selon un mode particulier de réalisation.

Au cours d'une étape 50, le module 22 est initialisé. Sa carte électronique est donc alimentée. Ceci a pour effet d'initialiser un canal de communication entre le module et l'équipement hôte 20.

Ensuite, le module 22 (plus précisément le contrôleur 32 via l'interface 30/31) reçoit à l'étape 51 une commande de l'équipement hôte 20 aux fins d'effectuer une opération cryptographique. Cette opération cryptographique (dont des exemples sont introduits plus haut) peut être tout ou partie d'une tâche demandée par un utilisateur à l'équipement hôte.

Le contrôleur 32 opère alors une conversion 52 de cette opération cryptographique en une multitude de tâches élémentaires à faire réaliser par les éléments sécurisés 35.

Cette conversion 52 peut par exemple comprendre le découpage 520 de données à traiter en blocs de données, la récupération optionnelle 521 de données de diversification par élément sécurisé, la formation 522 de commandes élémentaires puis l'affectation et l'ordonnancement 523 de ces commandes élémentaires par interface SPI 33.

Les données à découper sont par exemple des données de mise à jour d'un OS, des données de profil d'abonné, ou un flux de données, par exemple multimédia. A titre illustratif, le découpage est effectué par blocs successifs de 240 octets.

L'étape 521 est optionnelle car réalisée s'il est besoin de générer une clé cryptographique par élément sécurisé 35. Dans les exemples introduits plus haut, les données de diversification peuvent inclure un identifiant d'un équipement cible 10, 10' et/ou une donnée de session (par exemple une valeur aléatoire partagée avec l'équipement cible).

Comme introduit en lien avec la **Figure 6****,** trois types de commande élémentaire peuvent être créés à l'étape 522 pour chaque élément sécurisé 35 à solliciter.

La première commande élémentaire inclut par exemple le premier bloc de données à traiter par cet élément sécurisé 35 ainsi que les données de diversification qui lui sont affectées (par exemple l'identifiant d'un équipement cible apparié).

Les commandes élémentaires ultérieures comprennent uniquement les blocs ultérieurs de données à traiter par cet élément sécurisé 35. La réponse à chacune de ces commandes élémentaires ultérieures est le résultat (bloc traité) du traitement de la commande élémentaire précédente.

La dernière commande ne comprend aucun bloc de données et sollicite uniquement le résultat (bloc traité) du traitement de la commande élémentaire précédente (c'est-à-dire l'avant-dernière commande élémentaire).

Dans les exemples décrits ci-après, les blocs de données envoyées aux éléments sécurisés 35 peuvent être identiques (le cas par exemple de la mise à jour de l'OS d'équipements cibles 10) : chaque élément sécurisé 35 traite donc les mêmes données pour un équipement cible donné.

En variante, les blocs de données envoyées aux éléments sécurisés 35 peuvent être différents, par exemple être des blocs successifs d'un fichier : les éléments sécurisés 35 réalisent donc en parallèle le traitement par blocs dudit fichier, en utilisant par exemple la même clé cryptographique (utilisée par l'équipement cible notamment).

L'étape 523 permet au contrôleur 32 d'affecter les différentes commandes élémentaires ainsi créées aux interfaces SPI 33 qui vont bien, et dans un ordre approprié pour le multiplexage temporel tel que montré par exemple en **Figure** 6. Les commandes élémentaires ordonnées sont par exemple stockées en mémoire RAM des interfaces SPI 33.

Il s'ensuit, à l'étape 53 l'envoi des commandes élémentaires ordonnées sur l'interface SPI 33 correspondante. Il en résulte des envois successifs aux éléments sécurisés 35 comme montré en **Figure 6****.**

Les traitements au niveau des éléments sécurisés 35 consistent simplement à exécuter les commandes élémentaires reçues et à renvoyer les résultats obtenues (bloc traité) comme réponses. Ces traitements sont cadencés par les envois des commandes élémentaires par le contrôleur 32.

A l'étape 54, le contrôleur 32 reçoit ainsi les réponses des éléments sécurisés sollicités, c'est-à-dire principalement des blocs traités (par exemple chiffrés ou déchiffrés).

Ces blocs reçus sont agrégés à l'étape 55.

Par exemple, lorsque chaque élément sécurisé 35 traite les mêmes données pour un équipement cible donné, ce sont les blocs traités reçus du même élément sécurisé 35 qui sont agrégés les uns aux autres de telle sorte à former un fichier ou package traité global pour l'équipement cible, par exemple des données de mise à jour chiffrées prêtes à être envoyées.

Dans la variante où les éléments sécurisés 35 se partagent le traitement par bloc d'un fichier, ce sont les blocs traités reçus de tous ces éléments sécurisés 35 qui sont agrégés. A cette fin, le contrôleur 32 s'assure de garder le même ordre pour l'agrégation que celui utilisé pour le découpage du fichier initial en blocs.

L'envoi 53, la réception 54 et l'agrégation 55 sont répétées tant qu'il subsiste des commandes élémentaires non envoyées sur les interfaces SPI 33 (test 56).

Lorsque toutes les commandes élémentaires ont été traitées, les données agrégées (par exemple soit un fichier traité global, soit des données traitées par équipement cible) forment la réponse à la commande initialement reçue à l'étape 51. Aussi, ces données agrégées sont retournées à l'équipement hôte 20 en tant que réponse, lors de l'étape 57.

Cela permet à l'équipement hôte 20 d'obtenir efficacement ces données issues de traitements cryptographiques sécurisés. Il peut alors les utiliser pour les transmettre à ou aux équipements cibles 10, 10', par exemple pour envoyer des données de mise à jour de l'OS d'eUICC distantes 10 qui sont cryptées à l'aide d'une clé propre à chacune de ces eUICC ou pour envoyer un flux multimédia (chiffré) à l'équipement cible 10'. Il s'agit notamment des deux applications typiques évoquées précédemment et décrites plus en détails maintenant.

De retour à la **Figure 2****,** dans la première application typique évoquée, il s'agit pour le module électronique 22 d'assurer la gestion à distance d'une flotte d'éléments sécurisés équipant les terminaux mobiles 10.

A titre illustratif seulement, les éléments sécurisés 35 composant le module électronique 22 peuvent être du même type (ou des mêmes types) que celui (ceux) des éléments sécurisés équipant les terminaux mobiles 10 de la flotte distante. L'expression « éléments sécurisés du même type » signifie que ces éléments sécurisés satisfont un même standard de carte. Par exemple, deux cartes SIM sont de même type tandis qu'une carte SIM et une carte eUICC sont de type différent. Cela permet à l'invention de ne pas requérir une autre certification que celle déjà prévue pour les éléments sécurisés de la flotte distante à gérer.

Bien entendu, tout ou partie des éléments sécurisés 35 peut être de nature différente de celle des éléments sécurisés de la flotte distante à gérer. La flotte distante peut également ne pas être formée d'éléments sécurisés, mais uniquement d'équipements électroniques classiques.

Dans un mode particulier, chaque élément sécurisé 35 du module 22 est apparié avec un élément sécurisé de la flotte distante de sorte que l'élément sécurisé du module peut générer une clé cryptographique à partir d'une information secrète (par exemple une fonction de chiffrement ou encore une clé secrète) et d'une information (numéro d'identification de l'élément sécurisé) partagée avec l'élément sécurisé apparié ou peut en variante détenir une telle clé cryptographique partagée avec l'élément sécurisé apparié. Ceci permet notamment d'assurer un niveau de sécurité satisfaisant, tout en ayant moins d'opérations à effectuer pour assurer cette sécurité au niveau du terminal mobile et/ou de la carte.

Par exemple, les terminaux mobiles 10-1, 10-2, 10-3, 10-4 intègrent chacun au moins un élément sécurisé d'un premier type (ici, amovible, par exemple une carte SIM) tandis que les terminaux mobiles 10-5, 10-6, 10-7, 10-8 intègrent chacun au moins un élément sécurisé d'un second type, ici embarqué (e.g. eUICC).

Dans un premier exemple, une partie des éléments sécurisés 35 du module 22 sont du premier type, tandis qu'une autre partie des éléments sécurisés 35 sont du second type. Par exemple, ceux d'une grappe sont tous du premier type alors que ceux d'une autre grappe sont tous du second type, ce qui simplifie la gestion pour le contrôleur 32 du module 22.

Dans un second exemple, le HSM modulaire 20 comprend plusieurs modules 22, par exemple un module 22 avec des éléments sécurisés du premier type et un autre module 22 avec des éléments sécurisés du second type.

De surcroit, les éléments sécurisés 10 de la flotte et ceux 35 du module 22 peuvent avoir les mêmes contremesures prévues en cas d'attaque (e.g. électromagnétique). Ils peuvent en outre avoir les mêmes fonctions cryptographiques installées pour crypter/décrypter des données qu'ils s'échangent comme par exemple les mises à jour d'OS.

Indépendamment des types d'éléments sécurisés 35 eu égard à ceux de la flotte distante, la première application typique concerne le chiffrement de données dans les grappes 34 d'éléments sécurisés 35, ces données étant destinées à être transmises aux éléments sécurisés 10 de la flotte. A cette fin, le contrôleur 32 peut recevoir, du terminal hôte, une instruction/requête/commande de charger de nouvelles données dans les éléments sécurisés de la flotte. Ces données doivent alors être traitées, notamment chiffrées, en utilisant une clé propre à chacun des éléments sécurisés de la flotte.

C'est pourquoi l'instruction reçue est convertie en des tâches cryptographiques élémentaires à destination des éléments sécurisés, pour traiter ces données à l'aide d'une clé propre, au niveau de chaque élément sécurisé 35.

Il est donc une situation où des tâches cryptographiques élémentaires exécutées simultanément (au moins en partie) par les éléments sécurisés mettent en oeuvre la même opération cryptographique élémentaire, un chiffrement dans l'exemple, sur des données à l'aide d'une clé cryptographique spécifique à chaque élément sécurisé. Plus précisément, il s'agit de générer des données cryptées dédiées à une flotte distante d'éléments sécurisés, auquel cas les éléments sécurisés 35 du module électronique 22 mettent en oeuvre chacun une clé cryptographique, par exemple une clé de session, propre à un élément sécurisé respectif de la flotte distante.

A titre d'exemple, deux types de données peuvent être ainsi traitées à destination des éléments sécurisés distants.

Le premier exemple typique concerne des données de mise à jour de l'OS (ou toute autre application) de ces éléments sécurisés distants (éventuellement tout un OS compilé). Dans ce cas, les données simultanément traitées par les éléments sécurisés du module électronique sont identiques et comprennent des données de mise à jour d'un système d'exploitation (OS - ou toute autre application) des éléments sécurisés de la flotte distante. Cela permet de mettre à jour une flotte entière d'éléments sécurisés.

Le deuxième exemple typique concerne des données de profils d'abonné qu'un opérateur MNO souhaite charger sur les cartes SIM ou UICC ou eUICC de ses abonnés. Dans ce cas, les données simultanément traitées par les éléments sécurisés du module électronique comprennent des données de profils de téléphonie mobile spécifiques aux éléments sécurisés respectifs de la flotte distante. En effet, le profil à charger (ou à mettre à jour) diffère d'un abonné à l'autre. Cela permet de charger efficacement des profils éventuellement différents sur un grand nombre d'éléments sécurisés distants.

Bien entendu, d'autres exemples requérant le traitement de données pour une pluralité d'équipements cibles 10 peuvent être envisagés.

Quel que soit l'exemple, le processus de traitement des données selon l'invention est similaire (voir **Figure 5**). A des fins d'illustration, on s'intéresse au chiffrement (mais ce pourrait être toute autre opération cryptographique) d'un OS (mais ce pourrait être tout autre type de données), de taille d'environ 500 Ko, basé sur l'algorithme AES 256 et/ou MAC.

En pratique, l'OS à chiffrer est découpé en blocs (par exemple de 240 octets) puis une copie de chaque bloc est envoyée, bloc par bloc, par le contrôleur 32 aux éléments sécurisés 35 d'une ou plusieurs grappes 34 afin que tout ou partie de ces éléments sécurisés chiffrent (bloc après bloc) une copie de l'OS avec une clé de chiffrement qui lui est propre, notamment la clé cryptographique (obtenue par diversification) d'un élément sécurisé de la flotte distante qui lui est attribué (par exemple via l'appairage évoqué précédemment).

De ce fait, les éléments sécurisés 35 chiffrent en parallèle (avec un léger décalage comme montré sur la **Figure 6**) le même bloc reçu du contrôleur substantiellement pendant la même durée T (voir **Figure 6**), avant de passer au bloc suivant. Il résulte que l'ensemble des blocs de l'OS est *in fine* chiffré pour chaque élément sécurisé 10 de la flotte pour lequel un élément sécurisé 35 de chiffrement est affecté.

Les inventeurs ont constaté que cette application nécessite une cinquantaine d'éléments sécurisés 35 sur le module 20 pour permettre la mise à jour journalière de l'OS d'une flotte de 3,3 millions d'éléments sécurisés.

Conformément à des modes de réalisation, chaque élément sécurisé 35 peut générer sa propre clé de chiffrement, correspondant à la clé cryptographique de l'élément sécurisé distant avec lequel il est apparié. En particulier, la clé de chiffrement est calculée par l'élément sécurisé 35 à partir d'une clé racine ou maître commune à tous les éléments sécurisés 35 du module 22 et de données de diversification qui lui sont envoyées par le contrôleur. La génération de la clé de chiffrement, éventuellement une clé de session, peut notamment résulter d'une double diversification de la clé racine, tout d'abord à l'aide d'un identifiant préférentiellement unique de l'élément sécurisé distant auquel l'élément sécurisé 35 est affecté, puis à l'aide d'un identifiant de session. Eventuellement, plusieurs clés cryptographiques peuvent être générées selon le protocole et le canal sécurisé entre le serveur 20 et les éléments sécurisés de la flotte distante.

Dans la deuxième application typique évoquée, il s'agit pour le module électronique 22 de traiter un fichier volumineux, par exemple un flux multimédia, échangé avec un équipement cible 10'. Typiquement l'équipement cible 10' est dimensionné de façon similaire à l'équipement hôte 20, de telle sorte qu'il comporte le même nombre de modules électroniques 22 ou à tout le moins suffisamment de modules électroniques 22 pour pouvoir traiter le fichier échangé. Bien entendu, une dissymétrie de dimensionnement peut également être mise en oeuvre par exemple si le traitement cryptographique mis en oeuvre chez l'un est moins consommateur en ressources cryptographiques que le traitement cryptographique complémentaire mis en oeuvre chez l'autre.

Le recours aux modules électroniques 22 au niveau de deux équipements distants (ici l'équipement hôte 20 et l'équipement distant 10') a pour vocation de permettre l'établissement d'une communication hautement sécurisée, susceptible d'offrir des performances élevées. Les deux modules électroniques 22 aux deux extrémités de la communication sont typiquement complémentaires en ce que leurs éléments sécurisés mettant en oeuvre des tâches cryptographiques élémentaires qui sont complémentaires (c'est-à-dire réciproques, telles chiffrement/déchiffrement, signature/vérification de signature, etc.).

Pour ce faire, les tâches cryptographiques élémentaires exécutées simultanément (au moins en partie) par les éléments sécurisés d'une grappe mettent en oeuvre la même opération élémentaire cryptographique (chiffrement ou déchiffrement par exemple) sur des données différentes (chaque bloc composant le fichier à traiter) à l'aide d'une même clé cryptographique partagées par les éléments sécurisés. Cette clé est la même au niveau des deux équipements (algorithme cryptographique symétrique) ou est associée à celle utilisée dans l'autre équipement (clé privée-clé publique en cas d'algorithme cryptographique asymétrique).

On parallélise ainsi les opérations cryptographiques à réaliser sur le fichier. Il en résulte une vitesse de traitement et de transmission entre les deux équipements qui est élevée, pour une solution économiquement attractive (compte tenu du faible coût d'un circuit FPGA et d'éléments sécurisés traditionnels).

Les deux équipements peuvent être deux serveurs sur deux sites communiquant l'un avec l'autre, ou une clé USB (ou équivalent) d'un employé communiquant avec un serveur de son entreprise, ou encore un terminal mobile ou objet connecté sur le terrain communiquant avec un serveur d'un centre de données.

A titre illustratif, considérons une caméra IP envoyant un flux vidéo à 500 Kbits par second (kbps) à un serveur distant via l'Internet. Un chiffrement de blocs de 128 bits par l'algorithme AES est mis en place. La période T estimée de chiffrement d'un tel bloc par un élément sécurisé 35 est d'environ 1 ms, assurant un débit de transmission de 128 kbps par élément sécurisé 35. Quatre éléments sécurisés (500/128) apparaissent suffisants pour réaliser le traitement en temps réel de la vidéo (aussi bien au niveau de la caméra IP qu'au niveau du serveur distant).

On voit ainsi que pour un site doté d'un grand nombre de telles caméras IP, il suffit d'augmenter le nombre d'éléments sécurisés pour permettre un traitement (chiffrement) et une transmission en temps réel. Par exemple, 80 éléments sécurisés connectés au sein d'un module 22 permettent d'atteindre un débit de 10 Mbps. Le coût d'une telle solution technique reste bas.

Dans cette deuxième application typique, les éléments sécurisés 35 du module électronique 22 peuvent chacun contenir une première clé cryptographique KEY1 pour traiter des données (fichier/flux) échangés ou à échanger avec un premier équipement cible 10' et une ou plusieurs deuxièmes clés cryptographiques KEY2-KEYn pour traiter des données (fichier/flux) échangés ou à échanger avec respectivement un ou plusieurs deuxièmes équipements cibles 10'.

En variante, des grappes 34 différentes (et donc des bus SPI 36 différents) peuvent être dédiées au traitement des données (fichier/flux) échangées ou à échanger avec des équipements cibles 10' différents.

De même, pour améliorer les performances d'un module 22, on peut prévoir que tous les éléments sécurisés 35 d'une grappe 34 sont configurés pour mettre en oeuvre une même opération cryptographique élémentaire utilisant des informations différentes (mais préférentiellement la même clé cryptographique) et au moins deux grappes sont configurées pour mettre en oeuvre deux opérations cryptographiques élémentaires différentes. Par exemple, une grappe 34 (ou un bus SPI 36 correspondant) est dédiée à des opérations de chiffrement et/ou une autre grappe à des opérations de déchiffrement et/ou une autre grappe à des opérations de signature (ou vérification de signature) de messages et/ou une autre grappe à des opérations d'intégrité de messages (calcul ou vérification).

Les exemples qui précèdent ne sont que des modes de réalisation de l'invention qui ne s'y limite pas.

## Revendications

1. Module électronique (22), de type carte électronique, connectable à un dispositif hôte (20), le module électronique comprenant :
- un contrôleur de module (32) configuré pour communiquer avec le dispositif hôte, et
- une ou plusieurs grappes (34) d'éléments sécurisés connectés (35), au sein d'une même grappe, à un bus commun (36) qui les relie au contrôleur de module (32),
dans lequel le contrôleur de module (32) est configuré pour convertir une opération cryptographique en une pluralité de tâches cryptographiques élémentaires similaires utilisant des informations différentes et pour piloter l'exécution des tâches cryptographiques élémentaires par les éléments sécurisés (35), et
dans lequel les éléments sécurisés (35) du module électronique (22) sont certifiés conformes à au moins une des normes de sécurité suivantes : Federal Information Processing Standard ou « FIPS » 140-3/4, Critères Communs EAL4+ ou version 3.1 release 4, Minimum Energy Performance Standard ou « MEPS », MEPS2, ISO/IEC19790:2012.

2. Module électronique (22) selon la revendication 1, dans lequel des tâches cryptographiques élémentaires exécutées simultanément par les éléments sécurisés (35) mettent en oeuvre la même opération cryptographique élémentaire sur des données à l'aide d'une clé cryptographique spécifique à chaque élément sécurisé.

3. Module électronique (22) selon la revendication 2, dans lequel la tâche cryptographique élémentaire comprend la génération de données cryptées dédiées à une flotte distante d'éléments sécurisés (10), et les éléments sécurisés (35) du module électronique (22) mettent en oeuvre chacun une clé cryptographique propre à un élément sécurisé (10) respectif de la flotte distante.

4. Module électronique (22) selon la revendication 2 ou 3, dans lequel les données simultanément traitées par les éléments sécurisés (35) du module électronique (22) sont identiques et comprennent des données de mise à jour d'un système d'exploitation des éléments sécurisés (10) de la flotte distante.

5. Module électronique (22) selon la revendication 2 ou 3, dans lequel les données simultanément traitées par les éléments sécurisés (35) du module électronique (22) comprennent des données de profils de téléphonie mobile spécifiques aux éléments sécurisés (10) respectifs de la flotte distante.

6. Module électronique (22) selon la revendication 1, dans lequel des tâches cryptographiques élémentaires exécutées simultanément par les éléments sécurisés (35) d'une grappe (34) mettent en oeuvre la même opération élémentaire cryptographique sur des données différentes à l'aide d'une même clé cryptographique partagées par les éléments sécurisés.

7. Module électronique (22) selon la revendication 6, dans lequel les données différentes correspondent à des portions différentes d'un même flux de données.

8. Module électronique (22) selon l'une quelconque des revendications 1 à 7, dans lequel le contrôleur de module (32) est configuré pour multiplexer temporellement sur le bus (36) de la grappe (34), pendant un intervalle temporel (T) correspondant à une période estimée d'exécution d'une tâche cryptographique élémentaire par un élément sécurisé (35), des commandes élémentaires à destination des éléments sécurisés (35) de la grappe (34) pour l'exécution au moins partiellement simultanée de tâches cryptographiques élémentaires par ces éléments sécurisés lors d'une période d'exécution suivante.

9. Système comprenant deux dispositifs (20, 10') communiquant entre eux, chaque dispositif comprenant un module électronique (22) selon la revendication 6 ou 7, les éléments sécurisés (35) d'un des deux dispositifs mettant en oeuvre des tâches cryptographiques élémentaires qui sont complémentaires de celles mises en oeuvre par les éléments sécurisés de l'autre dispositif.

10. Système serveur (20) comprenant une unité de traitement et une pluralité de modules électroniques (22) selon l'une quelconque des revendications 1 à 8 reliés à l'unité de traitement.

11. Procédé de traitement dans un module électronique (22), de type carte électronique, connectable à un dispositif hôte (20) et comprenant un contrôleur de module (32) configuré pour communiquer avec le dispositif hôte et une ou plusieurs grappes (34) d'éléments sécurisés (35) connectés, au sein d'une même grappe, à un bus commun (36) qui les relie au contrôleur de module, le procédé comprenant les étapes suivantes :
- convertir (52), par le contrôleur de module, une opération cryptographique en une pluralité de tâches cryptographiques élémentaires similaires utilisant des informations différentes, et
- piloter (53) l'exécution des tâches cryptographiques élémentaires par les éléments sécurisés (35)
dans lequel les éléments sécurisés (35) du module électronique (22) sont certifiés conformes à au moins une des normes de sécurité suivantes : Federal Information Processing Standard ou « FIPS » 140-3/4, Critères Communs EAL4+ ou version 3.1 release 4, Minimum Energy Performance Standard ou « MEPS », MEPS2, ISO/IEC19790:2012.

12. Procédé de traitement selon la revendication 11, dans lequel des tâches cryptographiques élémentaires exécutées simultanément par les éléments sécurisés (35) comprennent la génération de données cryptées dédiées à une flotte distante d'éléments sécurisés (10) et mettent en oeuvre la même opération cryptographique élémentaire sur des données à l'aide d'une clé cryptographique spécifique à chaque élément sécurisé et propre à un élément sécurisé (10) respectif de la flotte distante.

13. Procédé de traitement selon la revendication 11, dans lequel des tâches cryptographiques élémentaires exécutées simultanément par les éléments sécurisés (35) d'une grappe (34) mettent en oeuvre la même opération élémentaire cryptographique sur des portions différentes d'un même flux de données, à l'aide d'une même clé cryptographique partagées par les éléments sécurisés.

14. Support d'informations lisible par une unité de traitement, et comprenant des instructions d'un programme d'ordinateur qui lorsqu'elles sont exécutées par l'unité de traitement mettent en oeuvre des étapes du procédé selon l'une quelconque des revendications 11 à 13.

## Patentansprüche

1. Elektronikmodul (22) vom Leiterplattentyp, das an eine Host-Vorrichtung (20) anschließbar ist, wobei das Elektronikmodul umfasst:
- eine Modulsteuerung (32), die dazu konfiguriert ist, mit der Host-Vorrichtung zu kommunizieren,
und
- einen oder mehrere Cluster (34) aus sicheren Elementen (35), die innerhalb eines selben Clusters an einen gemeinsamen Bus (36) angeschlossen sind, der sie mit der Modulsteuerung (32) verbindet,
wobei die Modulsteuerung (32) dazu konfiguriert ist, einen kryptografischen Vorgang in eine Mehrzahl von gleichartigen elementaren kryptografischen Aufgaben umzuwandeln, die verschiedene Informationen verwenden, und die Ausführung der elementaren kryptografischen Aufgaben durch die sicheren Elemente (35) zu steuern, und wobei die sicheren Elemente (35) des Elektronikmoduls (22) nach mindestens einer der folgenden Sicherheitsnormen zertifiziert sind: Federal Information Processing Standard oder "FIPS" 140-3/4, Gemeinsame Kriterien EAL4+ oder Version 3.1 Release 4, Minimum Energy Performance Standard oder "MEPS", MEPS2, ISO/IEC 19790:2012.

2. Elektronikmodul (22) nach Anspruch 1, bei dem elementare kryptografische Aufgaben, die von den sicheren Elementen (35) gleichzeitig ausgeführt werden, den gleichen elementaren kryptografischen Vorgang an Daten mithilfe eines spezifischen kryptografischen Schlüssels für jedes sichere Element implementieren.

3. Elektronikmodul (22) nach Anspruch 2, bei dem die elementare kryptografische Aufgabe die Erzeugung von dedizierten verschlüsselten Daten für eine entfernte Flotte aus sicheren Elementen (10) umfasst und die sicheren Elemente (35) des Elektronikmoduls (22) jeweils einen kryptografischen Schlüssel implementieren, der einem jeweiligen sicheren Element (10) der entfernten Flotte eigen ist.

4. Elektronikmodul (22) nach Anspruch 2 oder 3, bei dem die von den sicheren Elementen (35) des Elektronikmoduls (22) gleichzeitig verarbeiteten Daten identisch sind und Daten zur Aktualisierung eines Betriebssystems der sicheren Elemente (10) der entfernten Flotte umfassen.

5. Elektronikmodul (22) nach Anspruch 2 oder 3, bei dem die von den sicheren Elementen (35) des Elektronikmoduls (22) gleichzeitig verarbeiteten Daten spezifische Mobiltelefonie-Profildaten für die sicheren Elemente (10) der entfernten Flotte umfassen.

6. Elektronikmodul (22) nach Anspruch 1, bei dem elementare kryptografische Aufgaben, die von den sicheren Elementen (35) eines Clusters (34) gleichzeitig ausgeführt werden, den gleichen elementaren kryptografischen Vorgang an verschiedenen Daten mithilfe eines selben kryptografischen Schlüssels ausführen, der von den sicheren Elementen geteilt wird.

7. Elektronikmodul (22) nach Anspruch 6, bei dem die verschiedenen Daten verschiedenen Abschnitten eines selben Datenstroms entsprechen.

8. Elektronikmodul (22) nach einem der Ansprüche 1 bis 7, bei dem die Modulsteuerung (32) dazu konfiguriert ist, auf dem Bus (36) des Clusters (34) während eines Zeitintervalls (T), das einem geschätzten Ausführungszeitraum einer elementaren kryptografischen Aufgabe durch ein sicheres Element (35) entspricht, an sichere Elemente (35) des Clusters (34) gerichtete elementare Befehle zur mindestens teilweise gleichzeitigen Ausführung von elementaren kryptografischen Aufgaben durch diese sicheren Elemente während eines folgenden Ausführungszeitraums zeitlich zu multiplexen.

9. System, umfassend zwei untereinander kommunizierende Vorrichtungen (20, 10'), wobei jede Vorrichtung ein Elektronikmodul (22) nach Anspruch 6 oder 7 umfasst, wobei die sicheren Elemente (35) einer der beiden Vorrichtungen elementare kryptografische Aufgaben implementieren, die komplementär zu denen sind, die von den sicheren Elementen der anderen Vorrichtung ausgeführt werden.

10. Serversystem (20), umfassend eine Verarbeitungseinheit und eine Mehrzahl von Elektronikmodulen (22) nach einem der Ansprüche 1 bis 8, die mit der Verarbeitungseinheit verbunden sind.

11. Verarbeitungsverfahren in einem Elektronikmodul (22) vom Leiterplattentyp, das an eine Host-Vorrichtung (20) anschließbar ist und eine Modulsteuerung (32) umfasst, die dazu konfiguriert ist, mit der Host-Vorrichtung zu kommunizieren, und einen oder mehrere Cluster (34) aus sicheren Elementen (35), die innerhalb eines selben Clusters an einen gemeinsamen Bus (36) angeschlossen sind, der sie mit der Modulsteuerung verbindet, wobei das Verfahren die folgenden Schritte umfasst:
- Umwandeln (52), durch die Modulsteuerung, eines kryptografischen Vorgangs in eine Mehrzahl von gleichartigen elementaren kryptografischen Aufgaben, die verschiedene Informationen verwenden, und
- Steuern (53) der Ausführung der elementaren kryptografischen Aufgaben durch die sicheren Elemente (35)
wobei die sicheren Elemente (35) des Elektronikmoduls (22) nach mindestens einer der folgenden Sicherheitsnormen zertifiziert sind: Federal Information Processing Standard oder "FIPS" 140-3/4, Gemeinsame Kriterien EAL4+ oder Version 3.1 Release 4, Minimum Energy Performance Standard oder "MEPS", MEPS2, ISO/IEC 19790:2012.

12. Verarbeitungsverfahren nach Anspruch 11, bei dem elementare kryptografische Aufgaben, die von den sicheren Elementen (35) gleichzeitig ausgeführt werden, die Erzeugung von dedizierten verschlüsselten Daten für eine entfernte Flotte aus sicheren Elementen (10) umfassen und den gleichen elementaren kryptografischen Vorgang an Daten mithilfe eines kryptografischen Schlüssels ausführen, der spezifisch für jedes sichere Element ist und einem jeweiligen sicheren Element (10) der entfernten Flotte eigen ist.

13. Verarbeitungsverfahren nach Anspruch 11, bei dem elementare kryptografische Aufgaben, die von den sicheren Elementen (35) eines Clusters (34) gleichzeitig ausgeführt werden, den gleichen elementaren kryptografischen Vorgang an verschiedenen Abschnitten eines selben Datenstroms mithilfe eines selben kryptografischen Schlüssels implementieren, der von den sicheren Elementen geteilt wird.

14. Datenträger, der von einer Verarbeitungseinheit lesbar ist und Anweisungen eines Computerprogramms umfasst, die, wenn sie von der Verarbeitungseinheit ausgeführt werden, Schritte des Verfahrens nach einem der Ansprüche 11 bis 13 implementieren.

## Claims

1. Electronic module (22), of electronic board type, which can be connected to a host device (20), the electronic module comprising:
- a module controller (32) configured to communicate with the host device, and
- one or more clusters (34) of secure elements (35) connected, within the same cluster, to a common bus (36) which connects them to the module controller (32),
wherein the module controller (32) is configured to convert a cryptographic operation into a plurality of similar elementary cryptographic tasks using different items of information and to drive the execution of the elementary cryptographic tasks by the secure elements (35), and wherein the secure elements (35) of the electronic module (22) are certified as compliant with at least one of the following security standards: Federal Information Processing Standard or "FIPS" 140-3/4, Common Criteria EAL4+ or version 3.1 release 4, Minimum Energy Performance Standard or "MEPS", MEPS2, ISO/IEC19790:2012.

2. Electronic module (22) according to Claim 1, wherein elementary cryptographic tasks executed simultaneously by the secure elements (35) implement the same elementary cryptographic operation on data using a cryptographic key which is specific to each secure element.

3. Electronic module (22) according to Claim 2, wherein the elementary cryptographic task comprises generating dedicated encrypted data for a remote fleet of secure elements (10), and the secure elements (35) of the electronic module (22) each implement a cryptographic key which is specific to a respective secure element (10) of the remote fleet.

4. Electronic module (22) according to Claim 2 or 3, wherein the data simultaneously processed by the secure elements (35) of the electronic module (22) are identical and comprise data for updating an operating system of the secure elements (10) of the remote fleet.

5. Electronic module (22) according to Claim 2 or 3, wherein the data simultaneously processed by the secure elements (35) of the electronic module (22) comprise data of mobile telephony profiles which are specific to the respective secure elements (10) of the remote fleet.

6. Electronic module (22) according to Claim 1, wherein elementary cryptographic tasks executed simultaneously by the secure elements (35) of a cluster (34) implement the same cryptographic elementary operation on different data using the same cryptographic key shared by the secure elements.

7. Electronic module (22) according to Claim 6, wherein the different data correspond to different portions of the same data stream.

8. Electronic module (22) according to any one of Claims 1 to 7, wherein the module controller (32) is configured to time-division multiplex, on the bus (36) of the cluster (34), during a time interval (T) corresponding to an estimated period for execution of an elementary cryptographic task by a secure element (35), elementary commands to secure elements (35) of the cluster (34) for the at least partially simultaneous execution of elementary cryptographic tasks by these secure elements during a following execution period.

9. System comprising two devices (20, 10') communicating with one another, each device comprising an electronic module (22) according to Claim 6 or 7, the secure elements (35) of one of the two devices implementing elementary cryptographic tasks which are complementary to those implemented by the secure elements of the other device.

10. Server system (20) comprising a processing unit and a plurality of electronic modules (22) according to any one of Claims 1 to 8 which are connected to the processing unit.

11. Method for processing in an electronic module (22), of electronic board type, which can be connected to a host device (20) and comprises a module controller (32) configured to communicate with the host device and one or more clusters (34) of secure elements (35) connected, within the same cluster, to a common bus (36) which connects them to the module controller, the method comprising the following steps:
- the module controller converting (52) a cryptographic operation into a plurality of similar elementary cryptographic tasks using different items of information, and
- driving (53) the execution of the elementary cryptographic tasks by the secure elements (35),
wherein the secure elements (35) of the electronic module (22) are certified as compliant with at least one of the following security standards: Federal Information Processing Standard or "FIPS" 140-3/4, Common Criteria EAL4+ or version 3.1 release 4, Minimum Energy Performance Standard or "MEPS", MEPS2, ISO/IEC19790:2012.

12. Processing method according to Claim 11, wherein elementary cryptographic tasks executed simultaneously by the secure elements (35) comprise generating dedicated encrypted data for a remote fleet of secure elements (10) and implement the same elementary cryptographic operation on data using a cryptographic key which is specific to each secure element and specific to a respective secure element (10) of the remote fleet.

13. Processing method according to Claim 11, wherein elementary cryptographic tasks executed simultaneously by the secure elements (35) of a cluster (34) implement the same cryptographic elementary operation on different portions of the same data stream, using the same cryptographic key shared by the secure elements.

14. Information medium which can be read by a processing unit, and comprises computer program instructions which, when they are executed by the processing unit, implement steps of the method according to any one of Claims 11 to 13.
